Europäisches Patentamt

European Patent Office

Office européen des brevets

(11) Publication number: **0 256 391**
**A2**

# (12) EUROPEAN PATENT APPLICATION

(21) Application number: 87111076.3

(22) Date of filing: 30.07.87

(51) Int. Cl.⁴: **C09D 3/00** , C08F 257/02 ,
C08F 265/10

(30) Priority: 20.08.86 US 898357

(43) Date of publication of application:
24.02.88 Bulletin 88/08

(84) Designated Contracting States:
DE FR GB IT

(71) Applicant: THE GLIDDEN COMPANY
900 Huntington Building 925 Euclid Avenue
Cleveland Ohio 44115(US)

(72) Inventor: Martino, Phillips C.
4646 Boxwood Drive
Brunswick Ohio(US)

(74) Representative: Baillie, Iain Cameron et al
c/o Ladas & Parry Isartorplatz 5
D-8000 München 2(DE)

(54) Thermosetting emulsion polymers.

(57) An emulsion core/shell polymer produced by
two-stage emulsion copolymerization of monomers
where the first stage monomers comprising alkylol
acrylamide, functional monomer, and other ethylenic
monomers, wherein the alkylol acrylamide and func-
tional monomer are adapted to cross-link to provide
a minor amount of cross-linking in the core. The Tg
of the core is above 40C and the Tg of the shell is
below 20C. The core/shell polymer is used in coat-
ing particularly useful as end coatings for ends of
beverage containers.

EP 0 256 391 A2

## THERMOSETTING EMULSION POLYMERS

### BACKGROUND OF THE INVENTION

This invention relates to polymeric compositions and processes particularly useful in surface coating compositions and more particularly to aqueous compositions based on polymeric binder produced by two-stage emulsion polymerization to produce core-shell polymeric particles comprising a high Tg core in combination with a low Tg shell.

Water-based coating compositions for use as internal sanitary liners for metal containers are suggested in U.S. Pat. No. 3,991,216. Such polymers are based on inter-polymers of copolymerized acrylamide monomer, carboxylic monomer, and other ethylenically unsaturated monomers. However, such polymers are difficult to spray and often exhibit deficient film properties such as lack of resistance to ethanol and hence are undesirable for containers for alcoholic beverages. Commonly assigned U.S. 4,499,212 relates to sprayable latex polymers for interior can coatings produced by step-wise polymerization of ethylenic monomers wherein alkylol acrylamide monomers are copolymerized in the second stage monomer addition to preferentially locate alkylol acrylamide groups in the surface portion of the latex polymer particles to partially cross-link the acrylamide monomer with functional monomer to produce a lightly cross-linked polymer particle surface. Although prior patents suggest latex coatings as interior can coatings, such as commonly assigned 4,522,961, these coatings are based on a combination of an emulsion polymer with epoxy resins.

A particularly difficult application for aqueous can coatings is the use of latex emulsion polymers in beverage can end coatings. Can end coatings are applied separately to the end portion of the beverage can but nevertheless must exhibit the same film integrity properties as the interior can coating since both coatings are interior coatings applied to protect the interior metal surface from the beverage. However, application and coating characteristics of end coatings differ considerably from the spray applied interior coatings. For instance, can end coatings are applied to sheet aluminum by roll coating such as reverse roll coating at relatively high polymeric solids content, such as 35% to 50% by weight, to achieve a film coverage of about 5 to 8 milligrams per square inch of surface. In contrast, interior can coatings are spray applied at much lower polymeric solids content (15% to 25%) and require lower film thickness. Another difference resides in the differences in curing temperatures where end coatings are roller applied to aluminum sheet and require about 20 seconds at 225°C., whereas interior can coatings are cured at 190°C. for about 2 minutes.

Perhaps the most significant difference between spray applied interior can coatings and roller applied end coatings relates to coating application techniques based on subsequent metal forming operations. For instance, interior can coatings are spray applied to the interiors of preformed cans requiring no additional forming operations. However, end coatings are applied to sheet aluminum, cured, and then are subjected to numerous fabrication steps which number at least six before the can end is completely formed. After the end coating is completely cured, the sheet aluminum is punched with a circular die to produce a flat circular blank for the can end. If the coating lacks sufficient flexibility, the coating will crack (fail) during any one of the six or more post forming steps. In addition to flexibility, the end coating requires sufficient hardness to prevent excessive stretching and tearing in the punching step as well as subsequent forming steps. In this regard, the end coating must cut cleanly with the aluminum without filaments or strands of polymer occurring at the periphery of the circular cut. The occurrence of polymer filaments or strands are highly objectionable to can manufacturers since the filaments or strands become detached during subsequent metal forming operations and cause clogging of fabrication equipment or become detached while the circular can end is bonded to the preformed can resulting in polymer fragment contamination of the beverage contained in the fabricated can. Such polymer fragments are a highly objectionable beverage contamination.

It now has been found that a highly desirable end can coating can be applied to sheet aluminum or other metal and provide excellent resistance to beverages in conjunction with suitable interior can coatings. The can end coatings of this invention can be applied to flat aluminum sheet and subsequently pressed into circular end blanks which are then fabricated with the preformed and precoated interior can shell to provide a physical and chemical resistant can useful for beverages. The end coating is primarily based on a two-stage emulsion process adapted to produce a high Tg polymeric core in combination with a low Tg polymer shell to provide a coating binder exhibiting superior film integrity properties at low levels of organic solvent and negligible levels of amine content. Significantly improved fabrication or metal forming properties are achieved with the coated aluminum blanks due to the high Tg core and low Tg shell composite polymer particles. The core/shell polymer particles having low Tg polymeric shells exhibiting a Tg below about 20°C. enables the coating based thereon to readily coalesce at low organic solvent levels (less than 10% by weight) and negligible amine levels. This improved coalescence characteristic enables the use of latex coatings having comparatively high levels of polymer solids which in turn avoid solvent blistering at higher film weight applications during the high temperature, short curing schedules of 20 seconds at 230°C. necessary in high speed aluminum sheet coating application and curing processes. Another advantage of the low Tg polymeric shell pertains to cured flexibility enabling the cured coating to withstand subsequent metal forming steps as well as the fabrication step with the preformed can shell. The relatively high Tg and crosslink density of the core of the polymer particles imparts a very desirable hardness to the cured film. By combining a high Tg cross-linked polymer core in combination with a low Tg shell advantageously eliminates the highly objectionable polymer fiber problem in finished cans and beverage contained in such can. These and other advantages will become more apparent by referring to the detailed description and the illustrative examples.

## SUMMARY OF THE INVENTION

Briefly, the polymer is produced by two-stage emulsion polymerization in accordance with this invention by first producing a high Tg core having a Tg greater than 40°C. followed by over polymerizing a low Tg polymeric shell on the core where the shell has a Tg less than 20°C. The first stage monomers comprise reactive functional monomers in conjunction with alkylol acrylamide monomer to impart minor amounts of internal cross-linking as well as produce a high Tg core polymer.

## DETAILED DESCRIPTION OF THE INVENTION

In accordance with this invention, the composition comprises a composite core/shell emulsion polymer comprising a high Tg (above 40°C.) partially cross-linked density core particle with a low Tg (below 20°C.) low cross-linked density polymeric shell produced by two-stage emulsion polymerization. The relatively high Tg and high cross-linked density of the latex particle core due to internal cross-linking imparts hardness to the composite polymer particle. The two stage monomers can be proportioned on a weight basis from 25/75 to 75/25 first stage monomers.

The first-stage monomer comprises copolymerized ethylenically unsaturated monomers comprising (i) reactive carboxyl, hydroxyl, amine or amide functional monomers, (ii) alkylol acrylamide and preferably alkylated alkylol acrylamide monomers, and (iii) other ethylenically unsaturated monomers. Functional monomers include carboxyl, hydroxyl, amino and amido functional groups containing monomers. Carboxyl containing monomers include acrylic acid and lower alkyl substituted acrylic acids wherein the preferred carboxylic monomers are acrylic and methacrylic acids. Hydroxyl containing monomers are hydroxy containing ethylenically unsaturated monomers including hydroxyl alkylacrylates such as 2-hydroxyl ethyl acrylate and methacrylate, 2-hydroxypropyl acrylate and methacrylate, and similar hydroxy alkyl acrylates. Amido containing monomers include acrylamide and methacrylamide or similar alkyl alkylol acrylamide monomers. Other reactive monomers include N-methylol acrylamide or methacrylamide monomers. The alkylated alkylol acrylamide monomers can be derivatives of acrylamide, methacrylamide, methylol acrylamide, or similar alkyl modified acrylamide monomers as shown for example in U.S. Pat. Nos. 3,991,216; 4,097,438; and 4,305,859. The acrylamide monomers preferably are alkylated with an alkyl group such as methyl, ethyl, propyl, n-butyl or iso-butyl, and similar alkylated alkylol acrylamide monomers, wherein the butylated monomers are preferred.

The remaining monomers that can be copolymerized with the alkylol acrylamide monomer and functional monomers to form a high Tg highly cross-linked polymeric core are ethylenically unsaturated monomers including vinyl monomers, for example, vinyl esters such as vinyl acetate, vinyl proprionate, vinyl butyrates, vinyl benzoate, isopropenyl acetate, and similar vinyl esters; vinyl halides such as vinyl chloride and vinylidene chloride, and vinyl cyanides such as acrylonitrile and methacrylonitrile. Other ethylenically unsaturated monomers can include, for example, those monomeric materials exhibiting ethylenic double bond unsaturation such as polymerizable allylic, acrylic, fumaric, maleic, or like ethylenically unsaturated double bond functionality. Ethylenically unsaturated monomers can include, for example, styrene, methyl styrenes, and similar alkyl styrene, chlorostyrene vinyl toluene, vinyl naphthalene, divinyl benzene, diallyl phthalate and similar diallyl derivatives, butadiene, alyll esters of acrylic and methacrylic acid and similar ethylenically unsaturated monomers. Further suitable ethylenically unsaturated monomers include acrylic unsaturated monomers such as lower alkyl esters of acrylic or methacrylic acid having an alkyl ester portion containing between 1 to 12 carbon atoms as well as aromatic derivatives of acrylic and methacrylic acid. Useful acrylic monomers include for example, acrylic and methacrylic acid, methyl acrylate and methacrylate, ethyl acrylate and methacrylate, butyl acrylate and methacrylate, propyl acrylate and methacrylate, 2-ethyl hexyl acrylate and methacrylate, cyclohexyl acrylate and methacrylate, decyl acrylate and methacrylate, isodecylacrylate and methacrylate, benzyl acrylate and methacrylate, and various reaction producers such as butyl, phenyl, and cresyl glycidyl ethers reaction with acrylic and methacrylic acids, hydroxyl alkyl acrylates and methacrylates, as well as amino acrylates and methacrylates.

The first stage monomer mix preferably contains at least one vinyl aromatic hydrocarbon (e.g. styrene), one or more alkyl acrylate or methacrylate, at least one unsaturated carboxylic acid (methacrylic acid is preferred), and one or more alkylol acrylamide (preferably alkylated) monomers. Additional functional monomers to facilitate crosslinking may also be included (e.g., hydroxyl, amine, epoxy) at various levels in the monomer mix. The first stage contains at least one monomer from each classification described above and comprises between 30-70% of the total monomers.

On a weight basis, the first stage monomers comprise 1% to 20% functional monomer, 1% to 20% alkylol acrylamide monomer, and the remaining being other ethylenic monomers, provided the Tg is greater than 40°C. Preferably, the first stage monomers comprises by weight between 3% and 10% alkylol acrylamide and between 1% and 5% functional monomer (preferably carboxyl monomer) to maintain relatively high levels of internal cross-linking in the first stage polymeric core.

The second stage monomers preferably include the first stage monomer components but at different weight percent levels to produce an outer polymeric shell having a lower Tg and much lower internal cross-linked density. Similar monomer components in both the first stage core and second stage shell insures compatability between the core and shell copolymers which avoids and precludes unnecessary agglomeration during the two-stage emulsion polymerization. The weight ratios of second stage monomers provide a polymer Tg of less than 20°C. and preferably less than 10°C. which can be controlled by the inclusion of little or no alkylol acrylamide monomer. Second stage monomers comprise on a weight basis between 0% and 10% functional monomers and preferably carboxyl monomer, between 0% and 5% alkylol acrylamide monomer with the remaining monomers being other ethylenically unsaturated monomers, as herein previously described. Where the second stage monomers include functional and alkylol acrylamide monomer, the amount of each monomer added is less than one-half the weight amount of the respective monomer added in the first stage with the balance being other ethylenically unsaturated monomer.

In accordance with the best mode of this invention preferably the two monomer stages are sequentially emulsion copolymerized during 6-8 hours at temperatures preferably between 70°C. to 80°C. utilizing standard semi-continuous methodology. Monomer conversion is routinely 99.8% and the final non-volatile content is usually 45-55%. Latex particle size is determined by the level of primary surfactant in the initial reactor charge. The preferred particle size is 2000-5000 A for optimum spray performance, although this range can be expanded for other application purposes since particle size has been found to have little effect upon coatings performance. Polymer Tg is also important and means "glass transition temperature" which is a term well known in the art and generally defines the onset of long range molecular motion wherein the polymer preserves the outward appearance of a solid but becomes rubbery and then tacky with increasing temperature and undergoes plastic flow and elastic deformation. The glass transition temperature can be measured in accordance with 41 Journal of Paint Technology, pages 167-178 (1969). The Tg can be calculated in accordance with the Fox equation or estimated by testing for a Vicat softening point as set forth in ASTM 1525.

In preparing the reactive self-curing latex copolymer, the ethylenically unsaturated monomers are copolymerized in water by the two-step polymerization described above through free radical induced polymerization using peroxy or azo catalyst, include various peroxygen compounds such as persulfates, benzoyl peroxide, t-butyl hydroperoxide, cumene hydroperoxide, and similar peroxide catalysts; and azo compounds such as azobis-isobutyronitrile and dimethylazobis-isobutyrate. Initiating systems further include alkali metal persulfate or ammonium persulfate with or without a reducing substance adapted to activate the persulfate. The initiators or catalysts ordinarily are used at a level of about 0.1% to 1% by weight of monomer. The resulting self-curing water dispersed latex polymer contains by weight between 1% and 20% copolymerized alkylol acrylamide monomer, between 1% and 20% reactive carboxyl, hydroxyl, amine or amide monomers, and the remaining being other ethylenically unsaturated monomer.

A highly desirable coating composition suited to roller application can be produced based on the latex core/shell polymer as the binder system in the coating. Coating compositions can be based on the latex polymer alone or part of a polymer blend.

The foregoing matrix polymer compositions can be mixed with a water-dispersible crosslinking component generally referred to as aminoplast resins adapted to heat cure and crosslink with the carboxyl functionality of the matrix copolymer. On a polymer weight basis, the coating composition contains between 0% and 15% aminoplast crosslinking resin mixed with between 85% and 100% of the above indicated matrix polymer mixtures.

For roller application the coating composition preferably contains between about 30% and 50% by weight polymeric solids relative to 50% and 70% water including other volatiles such as minor amounts of solvent. For applications other than roll coating, the aqueous polymeric dispersions can contain between about 50% and 90% by weight water. Organic solvents can be utilized to facilitate application and such solvents include n-butanol, 2-butoxy-ethanol-1, xylene, toluene, and preferably n-butanol is used in combination with 2-butoxy-ethanol-1. The coating composition of the present invention can be pigmented and/or opacified with known pigments and opacifiers. For many uses, including food uses, the preferred pigment is titanium dioxide. The resulting aqueous coating composition can be applied satisfactorily by conventional methods known in the coating industry. Thus, spraying, rolling, dipping, and flow coating application methods can be used for both clear and pigmented films, although roll coating is now the preferred method. After application onto the aluminum metal substrate the coating can be cured at temperatures above 200°C. and preferably above 225°C. for 20 seconds in fast cure processes for producing circular end blanks for beverage containers. For other processes, lower temperatures and longer curing times can be utilized.

For a better understanding of the present invention, the following examples are provided. In this application, all parts are parts by weight, all percentages are weight percentages, and temperatures are degrees Centigrade unless otherwise expressly noted.

EXAMPLE 1

Loaded 120 parts of deionized water and 0.10 parts of sodium dihexyl sulfosuccinate into the reactor and heated under nitrogen sparge with agitation to 170-172°F. At equilibriated reaction temperature, turned off nitrogen and added 0.10 parts ammonium bicarbonate and continued heat and agitation five minutes. Added to the reaction of mixture of 1.20 parts styrene and 0.80 parts ethyl acrylate to the reaction and emulsified for ten minutes. Added 0.30 parts ammonium persulfate to the reactor and allowed to react twenty minutes before beginning monomer feed number one.

Monomer feed number one consisted of 24.25 parts styrene, 11.0 parts ethyl acrylate, 3.75 parts methacrylic acid, 10.00 parts N-isobutoxylmethyl acrylamide (NiBMA) and 0.10 parts sodium bis (tridecyl sulfosuccinate). This monomer was added to the reactor at a constant rate so that addition was complete in 3.0 hours. Temperature was maintained at 170-172°F. during monomer stage one addition.

Monomer feed number two consisted of the monomers 11.25 parts styrene, 34.00 parts ethyl acrylate, 3.75 parts methacrylic acid, and 0.10 parts sodium bis (tridecyl sulfosuccinate). This monomer mix was added to the reactor over 3.0 hours also maintained temperature at 170-172°F. After the completion of monomer mix number two, the batch is held an additional two hours at reaction temperature to reduce free monomer levels to a minimum.

## Claims

1. A water-dispersed polymeric coating useful for interior can coatings, comprising:

a polymer consisting of core/shell polymer particles, the core portion having a Tg greater than 40°C. and the shell portion having a Tg less than 20°C., wherein the core comprises copolymerized monomers including coreactive alkylol acrylamide and functional monomers adapted to internally cross-link in the core structure, said polymer produced in a two-stage emulsion process wherein first stage monomers comprise by weight between 1% and 20% functional monomer, between 1% and 20% alkylol acrylamide monomer, and the remaining being other ethylenic monomers where minor amounts of alkylol acrylamide monomer are cross-linked with functional monomer to impart internal cross-linking in the core portion, and the second stage monomers include 0% to 10% functional monomer, with the balance being other ethylenically unsaturated monomers.

2. A water-dispersed polymeric coating according to claim 1, wherein the second stage monomers include alkylol acrylamide monomer up to 5% based on the weight of the second stage monomer, wherein the amounts of functional and alkylol acrylamide monomers respectively added in the second stage are each less than half of the first stage functional and alkylol acrylamide monomers respectively added in the first stage monomer.

3. A composition according to claim 1 or 2, wherein the copolymerized first stage alkylol acrylamide monomers comprises between 3% and 10% by weight of the first stage monomers.

4. A composition according to any one of the preceding claims, wherein the copolymerized first stage functional monomer comprises between 1% and 5% by weight of the first stage monomer.

5. A composition according to any one of the preceding claims, wherein the functional first stage monomer is selected from carboxyl, hydroxyl, amine, or amide functional monomer.

6. A composition according to any one of the preceding claims, wherein the first stage functional monomer is a carboxyl functional monomer.

7. A composition according to any one of the preceding claims, containing up to 15% by weight aminoplast resin.

8. A two-stage emulsion process for producing core/shell polymers of use in protective surface coatings, characterized by:

copolymerizing first stage monomers comprising on a weight basis between 1% and 20% functional monomer, between 1% and 20% alkylol acrylamide monomer, with the remaining being other ethylenically unsaturated monomer to form a polymeric core wherein the functional monomer cross-links with alkylol acrylamide to provide a minor amount of internal cross-linking within the polymeric core, said core having a Tg greater than 40°C.; and

copolymerizing second stage monomers comprising on a weight basis between 0% and 10% functional monomer, and the remaining being other ethylenically unsaturated monomer to form a polymeric shell over the core, and said polymeric shell having a Tg less than 20°C.

9. A process according to claim 8, wherein the step of copolymerizing second stage monomers includes alkylol acrylamide as a monomer up to 5% based on the weight of second stage monomer, wherein the second stage alkylol acrylamide and functional monomers respectively are less than half the weight of the first stage alkylol acrylamide and functional monomers respectively.

10. A process according to either of claims 8 and 9, wherein the first stage functional monomer is selected from carboxyl, hydroxyl, amine, or amide functional monomer.

11. A process according to any one of claims 8 to 10, wherein up to 15% by weight of aminoplast resin is added.

12. A process for coating a metal substrate which comprises applying thereto a composition as claimed in any one of claims 1-7.

13. A process according to claim 12, wherein said substrate is an aluminum artifact.

14. A process according to claim 12 or 13, wherein said metal substrate is to be used as an end cap for a beverage container.